# Europäisches Patentamt
## European Patent Office
## Office européen des brevets

(19)

(11) Numéro de publication: **0 101 663**
**B1**

(12) # FASCICULE DE BREVET EUROPEEN

(45) Date de publication du fascicule du brevet:
08.10.86

(51) Int. Cl.⁴: **G 04 B 39/02**

(21) Numéro de dépôt: **83810328.1**

(22) Date de dépôt: **19.07.83**

(54) Procédé de fabrication d'une montre et montre obtenue par ce procédé.

(30) Priorité: **12.08.82 CH 4831/82**

(43) Date de publication de la demande:
**29.02.84 Bulletin 84/9**

(45) Mention de la délivrance du brevet:
**08.10.86 Bulletin 86/41**

(84) Etats contractants désignés:
**DE FR GB**

(56) Documents cités:
**FR - A - 2 302 557**
**FR - A - 2 360 113**
**US - A - 2 357 904**
**US - A - 3 505 807**

(73) Titulaire: **ETA S.A. Fabriques d'Ebauches,
Schild-Rust-Strasse 17, CH-2540 Grenchen (CH)**

(72) Inventeur: **Mock, Elmar, Les Oeuchettes 18,
CH-2603 Pery (CH)**
Inventeur: **Müller, Jacques, Rue des Tilles 353,
CH-Reconvilier (CH)**

(74) Mandataire: **Barbeaux, Bernard et al, SMH Société
Suisse de Microélectronique et d'Horlogerie S.A.
Département Brevets et Licences 6, Faubourg du Lac,
CH-2501 Bienne (CH)**

ACTORUM AG

## Description

La présente invention est relative à un procédé de fabrication d'une montre dont la boîte est réalisée en matière plastique. Elle concerne également une montre obtenue par ce procédé.

Plus particulièrement, l'invention est relative à un procédé de fabrication d'une montre dont la boîte comporte une carrure pourvue d'un épaulement annulaire et une glace sur laquelle est ménagée une surface annulaire de serrage, coopérant avec ledit épaulement annulaire pour positionner le cadran de la montre, ce procédé consistant à placer ledit cadran sur ledit épaulement puis à assembler la carrure et la glace par un mouvement relativ axial jusqu'à obtention du coincement du cadran entre cet épaulement et cette surface d'appui.

Un tel procédé est connu du brevet US-A-3 505 807. Dans ce cas, l'assemblage de la carrure et de la glace est obtenu par emprisonnement d'un joint dans deux rainures latérales complémentaires ménagées respectivement dans la carrure et dans la glace, ces rainures étant amenées en regard l'une de l'autre pendant le mouvement relatif axial d'assemblage. Le joint est préalablement placé autour de la glace dans la rainure correspondante et le tout est alors descendu dans la carrure à l'aide d'un outil auxiliaire qui comprime provisoirement le joint.

Bien que ce procédé permette par une seule opération d'assemblage de réunir la carrure et la glace tout en bloquant le cadran en position, il reste entâché de graves inconvénients.

Tout d'abord, les rainures complémentaires recevant le joint doivent être usinées avec précision pour garantir l'étanchéité. Cette opération augmente le prix de revient.

Un autre désavantage résulte de la complexité de l'opération d'assemblage qui nécessite la mise en place d'un joint et un positionnement précis non seulement de la carrure et de la glace, mais encore de l'outil d'assemblage. Il en résulte une dépense en main-d'œuvre considérable.

En cas de chocs sur la montre, la glace peut temporairement se soulever du cadran en comprimant très légèrement le joint, ce dont il risque de résulter un déplacement du cadran dans son propre plan.

L'invention a pour but de fournir un procédé de fabrication qui conduit à l'assemblage de la carrure, de la glace et du cadran en une seule opération de fabrication, alors que les inconvénients mentionnés ci-dessus sont entièrement évités.

L'invention a donc pour object un procédé du type défini ci-dessus qui est caractérisé en ce qu'il consiste à réaliser ladite carrure et ladite glace en matière thermosoudable tout en réalisant sur chacune d'elles une face annulaire d'assemblage qui est munie d'une portion de contact et s'étendant radialement, et à presser lesdites faces annulaires l'une sur l'autre tout en provoquant une fusion des portion de contact jusqu'à obtention du coincement du cadran entre l'épaulement et la surface de serrage en regard, cette fusion résultant d'un apport d'énergie provoqué par un mouvement relatif entre lesdites portions.

Grâce à ces caractéristiques de l'invention, on applique de l'énergie mécanique par exemple sous forme d'ultrasons à la glace après que celle-ci ait été placée sur la boîte et que le cadran soit mis en place. Cette énergie est partiellement transmise à la boîte par l'intermédiaire des faces annulaires d'assemblage, ce qui produit une fusion partielle de la glace et de la boîte au niveau des faces en contact. Il en résulte ainsi une soudure par migration localisée des matériaux formant la boîte et la glace.

On comprend qu'ainsi l'échauffement est très localisé dans la glace et dans la boîte, ce qui entraîne des déformations également très localisées. En outre, l'assemblage résulte effectivement du soudage et non d'une liaison mécanique obtenue, par exemple, par coincement d'une garniture d'étanchéité. On limite ainsi au maximum l'introduction de contraintes ou de tensions internes dans la glace et dans la boîte. En outre, le soudage et la fusion partielle assurent une liaison permanente et une très bonne étanchéité entre glace et boîte de montre. Le soudage s'accompagnant d'un déplacement axial de la glace, permettant de coincer le cadran et de s'affranchir de certains défauts dimensionnels.

Il convient de signaler qu'il est connu d'après le document US-A-4 151 707 (FR 2 360 113), dans le cadre de la fabrication d'une boîte de montre, d'assemblage des pièces d'une boîte de montre par thermosoudage. Cependant, ce document antérieur prévoit cette opération uniquement pour réunir le fond de la boîte à la carrure, tandis que la glace est rendue solidaire de la carrure par surmoulage d'une collerette annulaire extérieure de la glace, lors de la confection de la carrure. L'opération de thermosoudage n'a donc pas pour effet de positionner le cadran entre des éléments de surface complémentaire.

Par ailleurs, le document US-A-2 357 904 décrit un procédé d'assemblage d'une glace à une lunette de boîte de montre, au cours duquel la glace est déformée en la cambrant tandis que de la chaleur lui est appliquée. La lunette est en métal et pourvue d'une rainure intérieure. L'opération d'assemblage consiste alors à remplir cette rainure avec de la matière de la périphérie de la glace ramollie par l'application de l'énergie thermique.

Ce procédé connu ne peut être utilisé si on veut immobiliser un cadran au cours de l'opération d'assemblage, car il faut appliquer contre la face intérieure de la glace, un outil à face d'extrémité courbe afin de pouvoir cambrer la glace. Ceci interdit la mise en place préalable du cadran.

L'invention a également pour objet une montre obtenue par le procédé défini di-dessus.

D'autres caractéristiques et avantages de l'invention apparaîtront plus clairement à la lecture de la description qui suit de plusieurs modes de mise en œuvre de l'invention donnés à titre d'exemple non limitatif. La description se réfère au dessin annexé dans lequel:

— la figure 1 est une vue générale en coupe verticale d'une montre pour expliquer le procédé objet de l'invention;

— la figure 2 est une vue partielle en coupe verticale de la périphérie de la glace et de la périphérie de la boîte montrant un premier mode de réalisation des usinages des faces d'assemblages;

— les figures 3a et 3b sont des vues partielles respectivement de la périphérie de la glace et de la périphérie de la boîte montrant un deuxième mode de réalisation des usinages de la glace et de la boîte de montre;

— la figure 4a montre une deuxième variante de réalisation des usinages de la boîte et de la périphérie de la glace; et

— les figures 4b et 4c montrent respectivement plus en détail un mode d'usinage de la périphérie de la glace utilisable dans la deuxième variante représentée sur la figure 4a, et la forme finale des usinages après le soudage.

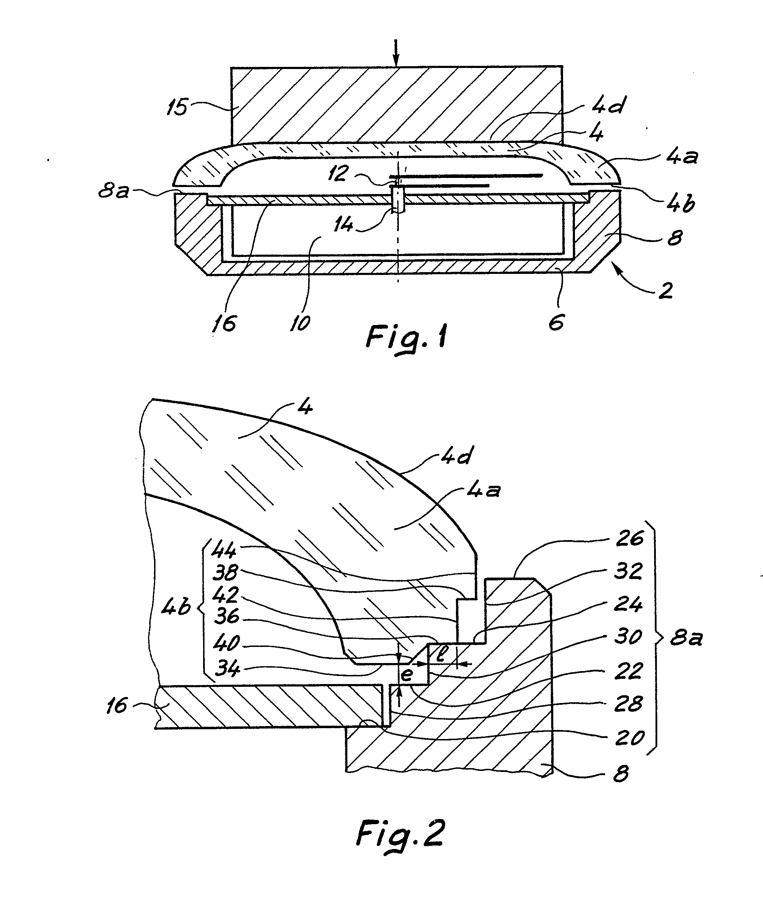

La figure 1 montre sous une forme simplifiée une boîte de montre 2 et une glace 4 non encore solidarisée avec la boîte et servant à obturer celle-ci. Dans le cas considéré, la boîte 2 est dite monobloc c'est-à-dire que le fond 6 et la carrure 8 formant la paroi latérale de la boîte sont réalisés à l'aide d'une seule et même pièce. Comme cela est bien connu la boîte contient un mouvement symbolisé par le rectangle 10 d'où sortent les axes d'aiguilles 12 et 14 traversant un cadran 16. Selon l'invention la boîte 2 est réalisée en matière thermo-plastique. Dans ce cas, la face interne de la boîte comporte le plus souvent un certain nombre d'usinages servant à la fixation ou au positionnement de certains éléments du mouvement. Comme cela est bien connu, le mouvement 10 comprend essentiellement un moteur pas à pas, un train d'engrenages entraînant les axes d'aiguilles 12 et 14, un circuit électronique et une base de temps pour commander le moteur et enfin une pile pour alimenter le moteur et les divers composants électroniques. On voit que dans l'exemple considéré il s'agit d'une montre à affichage analogique du type électronique. Il apparaîtra clairement à l'homme de l'art que l'invention pourrait tout aussi bien s'appliquer au cas d'une montre à affichage analogique mécanique ou encore à une montre électronique à affichage numérique.

La boîte 2 et la glace 4 sont réalisées toutes deux en matériaux thermoplastiques thermo-soudables entre eux. Pour la boîte 2 on peut par exemple utiliser un des matériaux désignés habituellement par ABS, ASA ou SAN. Ces matériaux correspondent respectivement à un acryl butadiène styrène, à un acryl styrène acryl-ester et à un styrène acryl nitrile. Dans ce cas la glace 4 est réalisée en une résine transparente acrylique (PMMA) communément désignée sous la marque «Plexiglas». On peut également réaliser la boîte 2 et la glace 4 à l'aide de polycarbonates, le polycarbonate constituant la glace étant bien sûr transparent. Bien entendu il est possible d'utiliser d'autres couples de matériaux à condition qu'ils soient thermo-soudables entre eux.

Il faut observer, de plus, que la carrure 8 comporte une face d'assemblage 8a et que la périphérie 4a de la glace 4 comporte également une face d'assemblage 4b. Au moment du montage les faces d'assemblage 4b et 8a, respectivement de la glace et de la boîte, se font face. Selon l'invention, et comme on l'expliquera ultérieurement plus en détail, au moins une partie des faces d'assemblage 4b et 8a sont munies d'usinage correspondants pour permettre le soudage effectif des deux pièces et l'obtention de l'étanchéité résultant de ce soudage. Pour réaliser le thermo-soudage des deux pièces on exerce sur la face supérieure 4d de la glace 4 une certaine pression pour appliquer de façon intime au moins une partie des faces d'assemblage 4b et 8a et simultanément on transmet à la glace 4 de l'énergie qui est également transmise localement à la boîte 8 au niveau de la surface d'assemblage 8a grâce au contact étroit réalisé entre ces deux surfaces. La conjugaison de la pression exercée par la glace et de l'apport d'énergie réalise une fusion très locale d'une partie des faces d'assemblage produisant ainsi un véritable soudage des deux pièces, c'est-à-dire qu'il y a non seulement échauffement très localisé des deux pièces mais également interpénétration par fusion des matériaux les constituant.

De préférence il s'agit d'un soudage par ultrasons. C'est-à-dire qu'à l'aide d'un outil 15 appelé sonotrode on transmet une vibration mécanique d'amplitude comprise entre 3 μm et 50 μm, à la glace, à une fréquence élevée de l'ordre de 40 kHz. L'ensemble de la glace se met en oscillation en synchronisme avec la sonotrode. Si on introduit une zone de moindre résistance dans la zone de contact, cette zone est soumise à des contraintes considérablement plus élevées que dans le reste du système. La première zone à entrer en fusion étant celle qui absorbe les plus grandes contraintes mécaniques, cette fusion intervient bien dans la zone de contact.

Comme cela apparaîtra plus clairement dans la suite de la description les usinages ménagés dans les faces d'assemblage 8a et 4b ont pour but de créer la zone de moindre résistance mécanique destinée à entrer en premier en fusion.

La figure 2 montre un premier mode de réalisation de ces usinages sur les faces d'assemblage respectivement de la glace et de la carrure de la boîte de montre. Sur la figure 2 les deux pièces sont représentées en position avant l'opération de soudage. Les usinages étant de révolution autour de l'axe de la montre, du moins lorsque celle-ci est circulaire, on ne décrira que la section droite des usinages. Si l'on part de la zone la plus proche de l'intérieur de la boîte et de la face interne de la carrure 8 on trouve des portions parallèles au plan de la montre respectivement référencées 20, 22, et 24, une portion externe de la surface d'assemblage de la carrure 8 référencée 26 restant libre, et par des portions parallèles à l'axe de la montre respectivement référencées 28, 30 et 32. Ces différentes portions définissent ainsi trois gradins lorsqu'on va du centre de la montre vers l'extérieur et la face supérieure de celle-ci. Les usinages ménagés dans la face d'assemblage 4b de la périphérie de la glace consistent en trois portions étagées parallèles au plan de la boîte de montre et référencées respectivement 34, 36 et 38. Ces portions sont raccordées par une portion inclinées 40 et par deux portions parallèles à l'axe de la montre respectivement référencées 42 et 44. Il faut observer que la portion 44 raccorde la portion 38 à la face externe 4d de la glace.

Les portions 20 et 28 définissent un logement pour la périphérie du cadran 16. La portion 22 qui fait partiellement face à la portion 34 de la glace définit une position d'arrêt pour la glace lors de l'enfoncement de celle-ci pendant l'opération de thermo-soudage. La portion 36 de la périphérie de la glace qui est sensiblement moins longue que la portion 24 de la carrure qui lui fait face définit la zone l intervenant lors du soudage et constitue ainsi la zone de plus faible résistance mécanique. Enfin il faut observer qu'un jeu est ménagé entre la portion 32 de la carrure et la portion 44 de la glace. A titre d'exemple dans le cas d'une montre dont le diamètre extérieur est de l'ordre de 31 mm la longueur l intervenant dans le soudage et résultant de la mise face à face des portions 24 et 36 est de l'ordre de 25 centièmes de mm. On voit donc que les surfaces effectivement en contact sont très réduites comme cela a déjà été indiqué.

En outre il est prévu au départ un jeu e entre les portions 34 et 22 respectivement de la glace et de la carrure. Par exemple ce jeu est de l'ordre de 20 centièmes de mm. Lors de l'opération de soudage, sous l'effet de la pression, les portions 24 et 36 sont mises en contact intime. Pour les raisons exposées cela provoque une fusion partielle de la glace et de la carrure et un enfoncement de la glace sous l'effet de la pression appliquée jusqu'à ce que les portions 22 et 34 viennent au contact. Comme cela a déjà été expliqué l'énergie est de préférence transmise sous forme d'ultrasons qui sont appliqués à la glace à l'aide d'un outil 15 appelé sonotrode.

Il faut observer que le jeu prévu entre les portions 32 et 44 a pour but de limiter strictement les surfaces en contact respectivement de la glace et de la carrure à celles où doit se produire effectivement la thermo-fusion c'est-à-dire dans la zone définie par les portions 36 et 24. On évite ainsi une perte d'énergie. Il faut observer de plus que la partie débordante de la portion 34 de la glace, en venant recouvrir la périphérie du cadre 16, assure le maintien de celui-ci dans le logement défini par les portions 20 et 28.

Il est encore important d'observer que compte tenu de l'enfoncement e de la glace par rapport à la boîte, il est ainsi possible d'obtenir un soudage étanche entre la glace et la boîte même s'il existe des défauts de coplanéité entre les portions 24 et 36 à condition bien sûr que ces défauts n'exédent pas la valeur e.

On voit enfin que le seul effet de la pression exercée sur la glace est de provoquer l'enfoncement de la glace au fur et à mesure de la fusion locale de la glace et de la carrure. Les forces sont donc réduites et les tensions internes résultantes également très réduites.

Dans la description qui précède on a envisagé le cas d'une glace de révolution. L'homme de l'art comprendra aisément que le procédé peut s'appliquer quelque soit la complexité du contour de la glace.

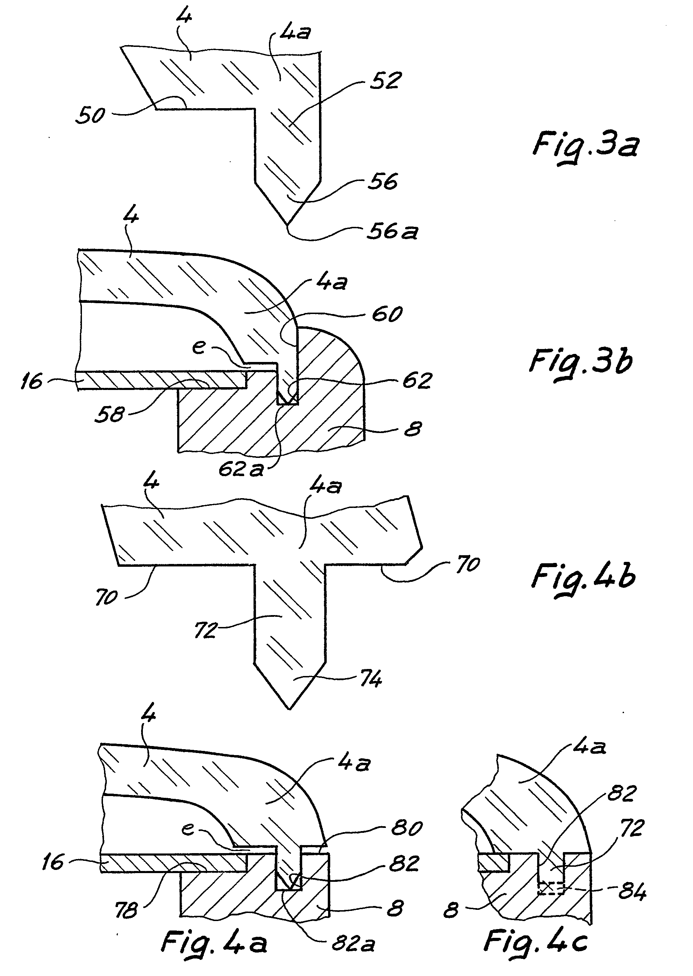

Les figures 3a et 3b illustrent une variante de réalisation des usinages. La figure 3a montre les usinages réalisés dans la face d'assemblage 4b de la périphérie de la glace. Ces usinages consistent en une face d'appui 50 parallèle au plan de la boîte d'où fait saillit une nervure annulaire 52. L'extrémité inférieure de la nervure 52 se termine par une portion 56 en forme d'arête. Comme le montre la figure 3b les usinages ménagés dans la face d'assemblage 8a de la carrure 8 consistent en un premier lamage 58 destiné à recevoir le cadran 16 et dans un deuxième lamage 60 destiné à recevoir la périphérie de la glace, le deuxième lamage 60 étant complété par une gorge annulaire 62 dont le fond 62a est plat, qui est destinée à recevoir la nervure 52. Lors de l'opération de soudage l'extrémité 56a de la nervure 52 est en contact avec le fond 62a de la gorge 62 ce qui constitue la zone de moindre résistance. La nervure a une hauteur supérieure à la profondeur de la gorge 62 pour laisser le jeu e lors de la mise en place des pièces avant soudage. Ainsi l'énergie appliquée à la glace provoque l'échauffement et la fusion de l'extrémité 56a de la nervure, ainsi qu'une fusion locale de la carrure à proximité du fond 62a. Il en résulte un soudage au niveau de l'extrémité de la nervure. Lors de cette opération il se produit également un enfoncement de la glace par rapport à la boîte, cet enfoncement étant limité par la face d'arrêt 50 de la glace qui vient également en appui sur la périphérie du cadran 16 pour immobiliser celui-ci.

Les modes de mise en œuvre des figures 2 et 3 laissent visible sur la face avant de la montre une portion de la carrure. Le mode de réalisation illustré par les figures 4 correspond au cas où l'on veut que la glace recouvre la totalité de la face avant de la carrure. Comme le montre la figure 4b l'usinage sur la périphérie de la glace consiste en une face d'appui 70 dans laquelle fait saillie une nervure 72, qui peut être identique à celle de la figure 3a, et qui comporte une arête 74. Comme le montre la figure 4a les usinages dans la face d'assemblage de la carrure consistent en un lamage 78 pour recevoir le cadran 16 et en une surface d'appui 80 dans laquelle est ménagée un gorge 82 présentant un fond plat 82a. Lors de l'opération de soudage la vibration provoque une fusion partielle de l'arête 74 et du fond 82a entraînant le soudage des deux pièces et un enfoncement de l'ensemble de la glace par rapport à la boîte sous l'effet de la pression appliquée.

La figure 4c montre les deux pièces après le soudage. La face d'arrêt 70 est venue au contact de la face d'assemblage 80 de la carrure. La fusion a fait disparaître l'arête 74 et a produit une zone référencée 84 dans laquelle la matière est constituée par une interpénétration des matériaux formant respectivement la carrure et la glace.

Il découle de la description précédente qu'l'invention permet effectivement d'obtenir une liaison étanche et définitive de la glace sur la boîte de montre par des opérations simples et qui n'altèrent pas de façon significative la résistance mécanique des deux pièces à assembler. En outre on comprend que, compte tenu de la liaison par soudage de la glace et de la boîte, ces deux pièces se comportent mécaniquement comme si elles n'en formaient qu'une. Il en résulte une amélioration sensible de la rigidité de l'ensemble de la boîte de montre. Cela est d'autant plus appréciable que, le plus souvent, de nombreux usinages sont ménagés dans le fond de la boîte pour loger les différents composants. Cela évite ainsi de prévoir des éléments supplémentaires d'armage de la boîte.

## Revendications

1. Procédé de fabrication d'une montre dont la boîte comporte une carrure (8) pourvue d'un épaulement annulaire (20; 58; 78) et une glace (4) sur laquelle est ménagée une surface annulaire de serrage (34) en regard dudit épaulement annulaire (20; 58; 78) et coopérant avec lui pour positionner le cadran (16) de la montre, ce procédé consistant à placer le cadran (16) sur ledit épaulement (20; 58; 78) puis à assembler la carrure (8) et la glace (4) par un mouvement relativ axial jusqu'à obtention du coincement du cadran (16) entre cet épaulement (20; 58; 78) et cette surface de serrage (34), caractérisé en ce qu'il consiste à réaliser ladite carrure (8) et ladite glace (4) en matière thermosoudable avec une face annulaire d'assemblage (8a, 4b) qui est munie d'une portion de contact (24, 36; 56, 62a; 72, 82a) s'étendant radialement et à presser lesdites faces annulaires (8a, 4b) l'une sur l'autre tout en provoquant une fusion locale des portions de contact jusqu'à obtention du coincement du cadran entre l'épaulement (20; 58; 78) et la surface de serrage (34) en regard, cette fusion résultant d'un apport d'énergie provoqué par un mouvement relatif entre lesdites portions.

2. Procédé selon la revendication 1, caractérisé en ce que lesdites portions de contact (24, 36) présentent une surface dont l'aire est nettement réduite par rapport à celle des faces d'assemblage.

3. Procédé selon la revendication 2, caractérisé en ce que la face d'assemblage (36) et la surface annulaire de serrage (34) de la glace (4) sont raccordées l'une à l'autre par une portion de surface tronconique (40) qui permet, lors de l'amorçage dudit mouvement, le centrage de la glace par rapport à la carrure (8).

4. Procédé selon la revendication 1, caractérisé en ce que l'usinage sur la face d'assemblage de la glace (4) comprend une nervure (52, 72) faisant saillie hors de la face, ladite nervure se terminant par une arête (56a, 74) et en ce que l'usinage sur la face d'assemblage de la carrure comprend une gorge (62, 82) pour permettre la pénétration de ladite nervure, ladite gorge présentant un fond (62a, 82a) sensiblement plat.

5. Procédé selon la revendication 4, caractérisé en ce que ladite face d'assemblage et ladite surface annulaire (70) de la glace (4) sont situées dans un même plan radial.

6. Procédé selon l'une quelconque des revendications 1 à 5, caractérisé en ce que le matériau constituant ladite carrure (8) est choisi dans le groupe comprenant l'acryl butadiène styrène (ABS), l'acryl styrène acryl-ester (ASA) et le styrène acryl nitrile (SAN) et en ce que le matériau formant la glace (4) est une résine transparente acrylique (PMMA).

7. Procédé selon l'une quelconque des revendications 1 à 5, caractérisé en ce que la carrure (8) et la glace (4) sont réalisées en polycarbonates.

8. Procédé selon l'une quelconque des revendications 1 à 7, caractérisé en ce que ladite carrure (8) est venue de matière avec le fond (6) de la boîte.

9. Montre dont la boîte comporte une carrure (8), un fond (6) et une glace (4), ladite carrure et ladite glace présentant l'une un épaulement annulaire d'appui (20; 58; 78) et l'autre une surface annulaire de serrage (34), un cadran serré entre cet épaulement et cette surface et des moyens pour assembler la glace et la carrure, caractérisée en ce que lesdits moyens d'assemblage comprennent une zone localisée constituée par un mélange des matériaux thermosoudables entre eux formant ladite glace (4) et ladite carrure (8).

10. Montre selon la revendication 9, caractérisée en ce que le fond (6) et la carrure (8) de la boîte forment un ensemble monobloc.

11. Montre selon l'une quelconque des revendications 9 et 10, caractérisée en ce que ladite zone localisée est située au fond d'une gorge (62, 82) et en ce que le mélange est formé par la matière entourant ce fond et par celle de l'arête (56a, 74) d'une nervure en saillie de la face correspondante de la glace (4).

12. Montre selon l'une quelconque des revendications 9 à 11, caractérisée en ce que ladite carrure (8) est réalisée dans un matériau choisi dans le groupe comprenant l'acryl butadiène styrène (ABS), l'acryl styrène acryl-ester (ASA) et le styrène acryl nitrile (SAN) et en ce que la glace (4) est réalisée en une résine transparente acrylique (PMMA).

13. Montre selon la revendication 7, caractérisée en ce que la ladite carrure (8) et ladite glace (4) sont réalisées avec des polycarbonates.

## Patentansprüche

1. Verfahren zum Herstellen einer Uhr, deren Gehäuse einen Mittelteil (8), versehen mit einer Ringschulter (20; 58; 78) sowie ein Glas (4) umfasst, auf dem eine ringförmige Klemmfläche (34) gegenüber der genannten Ringschulter (20; 58; 78) vorgesehen ist und mit dieser zusammenwirkt für das Positionieren des Zifferblattes (16) der Uhr, welches Verfahren darin besteht, dass Zifferblatt (16) auf der genannten Schulter (20; 58; 78) zu plazieren und danach den Mittelteil (8) und das Glas (4) durch eine relative Axialbewegung zu fügen bis zur Erreichung der Klemmung des Zifferblattes (16) zwischen der Schulter (20; 58;78) und dieser Klemmfläche (34), dadurch gekennzeichnet, dass es darin besteht, den genannten Mittelteil (8)und das genannte Glas (4) aus thermoverschweissbarem Material mit einer Ringfügeseite (8a, 4b) herzustellen, die mit einem Kontaktabschnitt (24, 26; 56, 62a; 72, 82a) versehen ist, welche sich radial erstreckt, und die genannten Ringseiten (8a, 4b) gegeneinander zu pressen unter Bewirken eines lokalen Aufschmelzens von Kontaktbereichen bis zum Erreichen der Klemmung des Zifferblattes zwischen der Schulter (20; 58; 78) und der Klemmfläche (34) ihr gegenüber, welches Aufschmelzen aus einer Energiezufuhr resultiert, bewirkt durch eine Relativbewegung zwischen den genannten Bereichen.

2. Verfahren nach Anspruch 1, dadurch gekennzeichnet, dass die genannten Kontaktbereiche (24, 36) eine Oberfläche aufweisen, deren Ausdehnung erheblich verringert ist gegenüber derjenigen der Fügeseiten.

3. Verfahren nach Anspruch 2, dadurch gekennzeichnet, dass die Fügeseite (36) und die ringförmige Klemmfläche (34) des Glases (4) miteinander durch einen kegelstumpfförmigen Oberflächenbereich (40) verbunden sind, der während des Beginns der genannten Bewegung die Zentrierung des Glases relativ zu dem Mittelteil (8) ermöglicht.

4. Verfahren nach Anspruch 1, dadurch gekennzeichnet, dass die Gestaltung auf der Fügeseite des Glases (4) eine Rippe (52, 72) umfasst, die aus der Seite vorspringt, welche Rippe in einer Spitze (56a, 74) ausläuft und dass die Gestaltung auf der Fügeseite des Mittelteiles eine Nut (62, 82) umfasst für die Ermöglichung des Eindringens der genannten Rippe, welche Nut einen im wesentlichen flachen Boden (62a, 82a) aufweist.

5. Verfahren nach Anspruch 4, dadurch gekennzeichnet, dass die genannte Fügeseite und die genannte Ringfläche (70) des Glases (4) in ein- und derselben Radialebene liegen.

6. Verfahren nach einem der Ansprüche 1 bis 5, dadurch gekennzeichnet, dass das Material, aus dem der genannte Mittelteil besteht, aus der Gruppe gewählt ist, welche umfasst Acrylbutadienstyren (ABS), Acrylstyrenacrylester (ASA) und Styrenacrylnitril (SAN) und dass das Material, aus dem das Glas (4) besteht, ein transparentes Acrylharz (PMMA) ist.

7. Verfahren nach einem der Ansprüche 1 bis 5, dadurch gekennzeichnet, dass der Mittelteil (8) und das Glas (4) aus Polycarbonat gefertigt werden.

8. Verfahren nach einem der Ansprüche 1 bis 7, dadurch gekennzeichnet, dass der genannte Mittelteil (8) einstückig mit dem Boden (6) des Gehäuses ausgebildet wird.

9. Uhr, deren Gehäuse einen Mittelteil (8), einen Boden (6) und ein Glas (4) umfasst, wobei der genannte Mittelteil und das genannte Glas einerseits eine ringförmige Anschlagschulter (20; 58; 78) und andererseits eine ringförmige Klemmfläche (34) aufweisen, wobei ein Zifferblatt zwischen dieser Schulter und dieser Fläche eingeklemmt ist und Mittel vorgesehen sind, um das Glas und den Mittelteil zu fügen, dadurch gekennzeichnet, dass die genannten Fügemittel eine lokalisierte Zone umfassen, gebildet von einem Gemisch von thermoschweissbaren Materialien zwischen ihnen, welche untereinander das genannte Glas (4) und den genannten Mittelteil (8) bilden.

10. Uhr nach Anspruch 9, dadurch gekennzeichnet, dass der Boden (6) und der Mittelteil (8) des Gehäuses eine einstückige Baugruppe bilden.

11. Uhr nach einem der Ansprüche 9 und 10, dadurch gekennzeichnet, dass die genannte lokalisierte Zone sich am Boden einer Nut (62, 82) befindet und dass das genannte Gemisch gebildet wird durch das Material, das diesen Boden umschliesst und von demjenigen einer Spitze (56a, 74), die aus einer entsprechenden Seite des Glases (4) vorspringt.

12. Uhr nach einem der Ansprüche 9 bis 11, dadurch gekennzeichnet, dass der genannte Mittelteil (8) aus einem Material gefertigt ist, gewählt unter der Gruppe, die umfasst: Acrylbutadienstyren (ABS), Acrylstyrenacrylester (ASA) und Styrenacrylnitril (SAN) und dass das Glas (4) aus einem transparenten Acrylharz (PMMA) gefertigt ist.

13. Uhr nach Anspruch 7, dadurch gekennzeichnet, dass der genannte Mittelteil (8) und das genannte Glas (4) mit Polykarbonaten hergestellt sind.

**Claims**

1. Method of manufacture of a watch the case of which comprises a caseband (8) provided with an annular shoulder (20; 58; 78) and a crystal (4) on which is arranged an annular gripping surface (34) facing said annular shoulder (20; 58; 78) and cooperating therewith so as to position the watch dial (16), such method consisting in placing the dial (16) on said shoulder (20; 58; 78), then assembling the caseband (8) and the crystal (4) by relative axial movement until clamping of the dial (16) between the shoulder (20; 58; 78) and the gripping surface (34) is obtained characterized in that it consists in forming said caseband (8) and said crystal (4) of heat sealing material with an annular assembly surface (8a, 4b) which is provided with a contact portion (24, 36; 56, 62a; 72, 82a) extending radially and pressing said annular surfaces (8a, 4b) against one another whilst bringing about local melting of the portions in contact until clamping of the dial between the shoulder (20; 58; 78) and the facing gripping surface (34) is obtained, such melting resulting from the energy introduced by the relative movement between said portions.

2. Method according to claim 1 characterized in that said contact portions (24, 36) exhibit a surface the area of which is clearly less than that of the assembly faces.

3. Method according to claim 2 characterized in that the assembly face (36) and the annular gripping surface (34) of the crystal are matched to one another by a portion of a truncated surface (40) which enables centering of the crystal relative to the caseband (8) at the beginning of the movement.

4. Method according to claim 1 characterized in that the machining on the assembly face of the crystal (4) includes a rib (52, 72) projecting out of the face, said rib terminating in a ridge (56a, 74) and in that the machining on the assembly face of the caseband includes a channel (62, 82) to enable penetration of said rib, said channel exhibiting a substantially flat bottom (62a, 82a).

5. Method according to claim 4 characterized in that said assembly face and said annular surface (70) of the crystal (4) are located in the same radial plane.

6. Method according to any of claims 1–5 characterized in that the material forming said caseband (8) is chosen from the group including acrylo butadiene styrene (ABS), acrylo styrene acrylo-ester (ASA) and styrene acrylo nitrile (SAN) and in that the material forming the crystal (4) is a transparent acrylic resin (PMMA).

7. Method according to any of claims 1–5 characterized in that the caseband (8) and the crystal (4) are formed of polycarbonates.

8. Method according to any of claims 1–7 characterized in that said caseband (8) is integral with the case back (6).

9. Watch the case of which comprises a caseband (8) a case back (6) and a crystal (4), said caseband and said crystal exhibiting respectively an annular support shoulder (20; 58; 78) and an annular gripping surface (34), a dial clamped between said shoulder and said surface and means for assembling the crystal and caseband characterized in that said assembling means comprises a localized zone formed by a mixture of mutually thermo sealing materials forming said crystal (4) and said caseband (8).

10. Watch according to claim 9 charachterized in that the case back (6) and the caseband (8) of the case form a single piece assembly.

11. Watch according to either of claims 9 and 10 characterized in that said localized zone is located at the bottom of a channel (62, 82) and in that the mixture is formed by the material surrounding said bottom and by that of the ridge (56a, 74) of a rib projecting from the corresponding face of the crystal (4).

12. Watch according to any of claims 9–11 characterized in that said caseband (8) is formed from a material chosen from the group including acrylo butadiene styrene (ABS), acrylo styrene acrylo-ester (ASA) and styrene acrylo nitrile (SAN) and in that the crystal is formed from a transparent acrylic resin (PMMA).

13. Watch according to claim 7 characterized in that said caseband (8) and said crystal are formed of polycarbonates.

1/2

Fig.1

Fig.2

Fig.3a

Fig.3b

Fig.4b

Fig.4a

Fig.4c